# FASCICULE DE BREVET EUROPEEN

(11) **EP 0 838 254 B1**
(45) Date de publication et mention de la délivrance du brevet: **04.07.2001**
(21) Numéro de dépôt: 96402617.3
(22) Date de dépôt: 04.12.1996
(51) Int. Cl.: B01D 33/01, B01D 25/12, B01D 29/01, B30B 9/06

(54) **Dispositif, installation et procédé de filtration de boues, en particulier de lisier**
Vorrichtung, Anlage und Verfahren zur Schlammfiltration, insbesondere zur Filtration von Gülle
Device, installation and process for filtering sludge, especially liquid manure

(30) Priorité: 25.10.1996 FR 9613029
(43) Date de publication de la demande: 29.04.1998
(73) Titulaire: GRANDE PAROISSE S.A., Puteaux, Hauts de Seine (FR)
(72) Inventeur: Norais, Marcel, 44260 Savenay (FR); Neveu, Bernard, 92800 Puteaux (FR)
(74) Mandataire: Michardière, Bernard

(56) Documents cités:
- EP-A- 0 260 249
- EP-A- 0 674 930
- US-A- 4 347 137
- US-A- 4 995 972
- PATENT ABSTRACTS OF JAPAN vol. 004, no. 057 (M-009), 26 Avril 1980 & JP 55 024789 A (MORI TEKKOSHO:KK), 22 Février 1980,

## Description

L'invention est relative à un dispositif de filtration de boues, du genre de ceux qui comprennent :
- un filtre disposé sur un caisson sensiblement horizontal et pouvant être déplacé d'une position de filtration à une position de nettoyage et inversement, ce filtre constituant, dans sa position de filtration, le fond d'une chambre de filtration d'axe essentiellement vertical,
- un piston propre à fermer la chambre de filtration en partie haute,
- des moyens de commande d'un déplacement relatif entre le caisson muni du filtre et le piston pour que, lors du rapprochement du piston et du caisson, une pression s'exerce sur un volume de boue introduit dans la chambre de filtration, de sorte qu'un filtrat liquide s'écoule vers le bas à travers le filtre et qu'un gâteau de matières solides demeure sur le filtre en fin d'opération,
- et un dispositif racleur prévu pour évacuer ce gâteau, lorsque le filtre est placé dans sa position de nettoyage.

Le terme "boue" utilisé dans la description et les revendications est à comprendre dans un sens très général pour désigner toute suspension de matières solides minérales et/ou organiques relativement fines dans un liquide, le lisier étant un exemple de boue particulier.

Un dispositif de filtration de ce genre est connu notamment d'après EP-A-0 674 930. Un tel dispositif donne relativement satisfaction et permet de traiter efficacement les boues. La disposition horizontale du filtre conduit à une utilisation homogène de la gravité sur toute la surface du filtre et à un écoulement bien réparti du filtrat vers le bas. Le gâteau de matière solide est supporté uniformément par le filtre horizontal et son éjection est entièrement contrôlée par le racleur.

On souhaite, cependant, réduire le temps de traitement d'un volume donné de boues et améliorer ainsi la productivité du dispositif, sans avoir à augmenter de manière sensible la pression dans la chambre de filtration.

On souhaite également que le dispositif reste d'un prix acceptable et d'une construction simple et robuste.

Selon l'invention, un dispositif de filtration du genre défini précédemment est caractérisé par le fait que le piston est réalisé sous forme d'un piston-filtre de sorte qu'un effluent liquide passe à travers le piston-filtre lors de la diminution du volume de la chambre de filtration, et qu' un moyen de pompage par aspiration est prévu pour évacuer l'effluent au-dessus du piston.

La surface de filtration ainsi augmentée, pratiquement doublée, permet de traiter plus rapidement un volume donné de boues et donc de réduire la durée d'un cycle. La pression de filtration dans la chambre peut être diminuée, ce qui permet de réaliser des économies de matière sur les éléments de construction du dispositif car ils sont soumis à des contraintes plus faibles.

De préférence le moyen de pompage par aspiration comprend une pompe à vide. Avantageusement, la pression établie par cette pompe à vide du côté du piston filtre opposé à la chambre de filtration est, en valeur de pression absolue, d'environ 400 à 500 millibars.

La pompe à vide peut être combinée avec une capacité dans laquelle est recueilli l'effluent aspiré à travers le piston-filtre.

Le piston-filtre comporte, avantageusement, du côté opposé à la chambre de filtration, un volume fermé propre à rassembler l'effluent qui a traversé le filtre du piston-filtre, ce volume fermé étant relié au moyen de pompage par aspiration.

Le piston-filtre est constitué , de préférence, d'un cylindre creux, ouvert du côté tourné vers la chambre de filtration, et muni d'un fond à son extrémité opposée, l'extrémité ouverte du cylindre creux étant équipée d'une grille de soutien sous laquelle est fixé le filtre proprement dit, notamment une toile de filtration. Le volume fermé est situé au-dessus de la grille et est muni , en partie haute, d'au moins un passage relié au moyen de pompage par aspiration.

Les mailles du filtre prévues sur le piston-filtre ont de préférence un diamètre nominal supérieur à celui des mailles du filtre inférieur.

Le racleur est avantageusement équipé de moyens de brossage en partie basse et en partie haute, et le dispositif est prévu pour que, dans la position de nettoyage, le racleur agisse simultanément contre le filtre inférieur et le filtre supérieur.

L'invention est également relative à une installation de traitement de boues, notamment de lisier, comprenant au moins un dispositif de filtration tel que défini précédemment.

L'invention concerne aussi un procédé de filtration de boues, utilisant un dispositif tel que défini précédemment, ce procédé étant caractérisé par le fait que le moyen de pompage par aspiration, en particulier la pompe à vide, combiné avec le piston-filtre supérieur, est maintenu en fonctionnement quelle que soit la position du piston, pendant les opérations de filtration.

L'invention consiste, mises à part les dispositions exposées ci-dessus, en un certain nombre d'autres dispositions dont il sera plus explicitement question ci-après à propos d'exemples de réalisation décrits avec référence aux dessins annexés, mais qui ne sont nullement limitatifs.

La Figure 1, de ces dessins, est une vue schématique en coupe verticale d'un dispositif de filtration selon l'invention avec piston-filtre en position haute et filtre inférieur en position basse, la chambre de filtration étant vide.

La Figure 2 est un schéma semblable à la Figure 1, montrant le dispositif dans une configuration où la chambre de filtration est en cours de remplissage de boues.

La Figure 3 est un schéma, semblable à celui de la Figure 1, du dispositif dans une configuration correspondant à une filtration qui s'achève.

La Figure 4 est un schéma, semblable à celui de la Figure 1, du dispositif dans une configuration correspondant à l'évacuation du gâteau de filtration et au nettoyage des surfaces filtrantes.

La Figure 5 est une vue schématique, plus détaillée, en élévation avec parties coupées de l'ensemble du dispositif de filtration.

La Figure 6 est une coupe axiale verticale, à plus grande échelle, d'un piston-filtre selon l'invention et de son enveloppe cylindrique délimitant la chambre de filtration.

La Figure 7, enfin, est un schéma d'une installation incorporant le dispositif de filtration.

Dans la description qui suit, les'éléments autres que le piston-filtre supérieur et ses annexes sont semblables à des éléments décrits dans EP-A-0 674 930 auquel on pourra se reporter pour plus de détails. Les éléments en question ne seront décrits que succinctement ci-après.

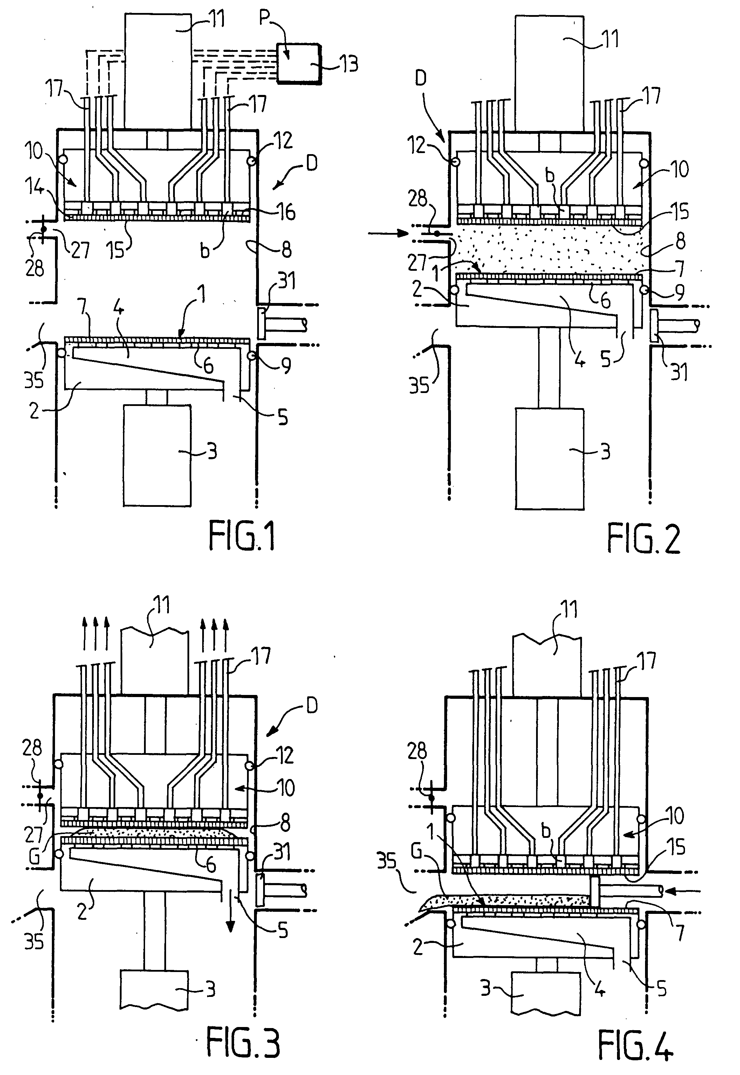

En se reportant aux dessins, notamment aux Figures 1 à 5, on peut voir un dispositif D de filtration de boues comprenant un filtre 1 disposé sensiblement horizontalement propre à être déplacé d'une position haute de filtration représentée sur les Figures 2 et 3 à une position basse de nettoyage représentée sur les Figures 1 et 4, et inversement. Le filtre 1 est placé sur un caisson 2 fixé à l'extrémité supérieure de la tige d'un vérin 3 d'axe vertical, propre à commander des déplacements en translation verticale du caisson 2 et du filtre 1. Le caisson 2 comporte une cavité 4 s'étendant sous toute la surface de filtration et dont le fond forme un entonnoir avec orifice d'évacuation 5. Une grille 6 , ou plaque perforée, avec des trous de passage de diamètre relativement grand, par exemple de l'ordre de cinq millimètres, est placée horizontalement au-dessus de l'ouverture supérieure de la cavité 4. Cette grille 6 sert de support à un moyen de filtration proprement dit constitué, de préférence, par une toile de filtration 7 fixée de manière démontable sur la grille 6.

Dans sa position de filtration (Figs. 2 et 3) le filtre 1, formé par l'ensemble de la grille 6 et de la 'toile 7, constitue le fond d'une chambre de filtration 8 d'axe essentiellement vertical. Une étanchéité périphérique est réalisée entre le caisson 2 et la surface interne de la chambre 8 par une garniture d'étanchéité 9.

Le dispositif de filtration D comprend, en outre, un piston 10 propre à fermer la chambre de filtration 8 en partie haute. Ce piston 10 est fixé à l'extrémité inférieure de la tige d'un vérin 11 coaxial au vérin 3 et propre à faire coulisser le piston 10 dans la chambre 8. Une garniture d'étanchéité périphérique 12 est prévue entre la paroi latérale du piston 10 et la paroi de chambre 8.

Selon l'invention, le piston 10 est réalisé sous forme d'un piston-filtre et un moyen de pompage P par aspiration est prévu pour évacuer l'effluent, ou filtrat, passant vers le haut à travers le piston-filtre 10 lors de la compression d'un volume de boue dans la chambre 8.

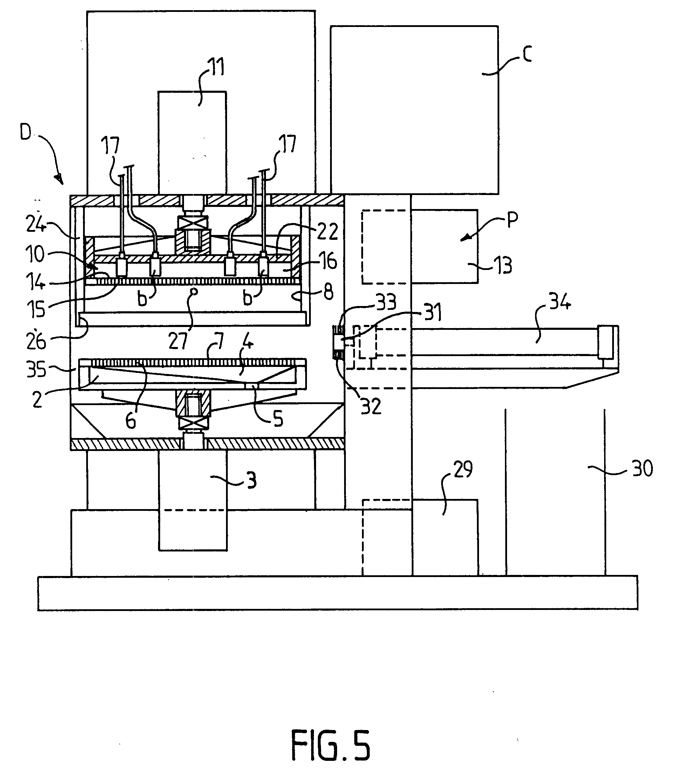

Le moyen de pompage par aspiration P est avantageusement constitué par une pompe à vide 13 (Fig.5), propre à créer une dépression au-dessus de la surface filtrante inférieure du piston-filtre 10. Une capacité C est interposée en série entre le piston-filtre 10 et la pompe 13 pour recueillir le filtrat. De préférence, la pompe à vide 13 est propre à créer une pression absolue d'environ 400 à 500 millibars derrière la surface filtrante du piston-filtre 10, c'est-à-dire une pression nettement inférieure à la pression atmosphérique.

Le piston-filtre 10 comporte, à sa partie inférieure, une grille de soutien 14 ou plaque perforée horizontale, s'étendant pratiquement suivant toute la section transversale du piston. Le moyen de filtration proprement dit est constitué par une toile de filtration 15, fixée de manière démontable sous la grille 14 et contre celle-ci, suivant toute sa surface. Un volume fermé 16 est prévu dans le piston 10 au-dessus de la 'grille 14 pour recueillir le filtrat qui a traversé la toile 15. Ce volume fermé 16 est relié, par exemple par des buses b et des canalisations flexibles 17, à la pompe à vide 13. De préférence, les buses b sont réparties sensiblement uniformément au-dessus de la grille 14.

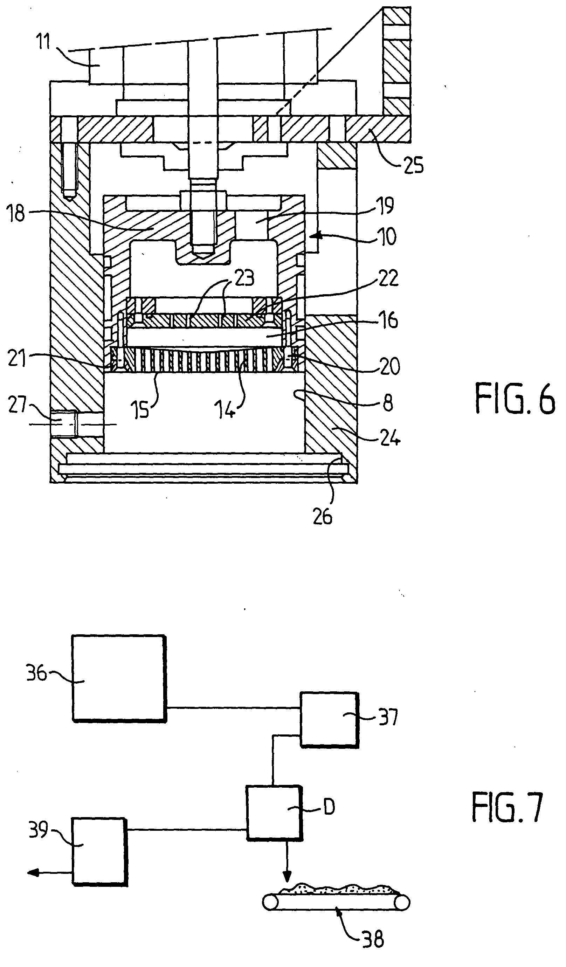

Comme illustré sur la Figure 6, le piston-filtre 10 peut être formé d'un cylindre de révolution creux, fermé en partie haute par une paroi transversale 18 traversée par un orifice 19. L'extrémité inférieure ouverte du piston 10 est équipée de la grille 14, fixée de manière démontable par des vis 20 coopérant avec des trous taraudés prévus dans la paroi cylindrique du piston 10. Ces vis 20 permettent, en outre, d'appliquer une bague de serrage 21 contre un dégagement de forme correspondante prévue à la périphérie de la grille 14. La toile de filtration 15, tendue sous la grille 14, est fixée à sa périphérie par serrage entre la bague 21 et le bord de la grille 14.

Le volume 16 est fermé en partie haute par une plaque horizontale 22, démontable, traversée par des passages 23 permettant l'aspiration du filtrat.

La mise en place des buses b d'aspiration peut s'effectuer directement sur la plaque 22 comme schématiquement illustrée sur la Figure 5. Selon une autre possibilité, le raccordement à la canalisation d'aspiration est effectué au niveau de l'orifice 19 selon la Figure 6, et les passages 23 ne sont pas équipés de buses d'aspiration.

La chambre 8, comme bien visible sur la Figure 6, est délimitée par une enveloppe cylindrique 24 dans laquelle peut coulisser de manière étanche le piston-filtre 10. Cette enveloppe 24 est fixée à son extrémité supérieure sous une console 25 qui sera elle-même fixée sur le bâti du dispositif de filtration D. L'extrémité inférieure de l'enveloppe 24 comporte un logement 26 cylindrique de plus grand diamètre propre à recevoir, en position de filtration, la partie supérieure du filtre 1 qui ferme alors de manière étanche la chambre 8. Un passage radial 27 est prévu dans l'enveloppe 24 pour faire communiquer la chambre 8, lorsqu'elle est fermée en partie basse par le filtre 1, avec un conduit d'admission des boues à filtrer. Ce conduit d'admission est équipé d'une vanne d'admission 28 schématiquement représentée sur la Figure 1. L'admission des boues dans le passage 27 est assurée par une pompe de reprise 29 (Fig.5) à partir d'une capacité de stockage 30.

Un racleur 31 muni de brosses 32,33 en partie basse et en partie haute (Fig. 5) est disposé sur le côté et est propre à se déplacer transversalement, à l'horizontale, pour assurer le nettoyage simultané des toiles de filtration 7 et 15 après une opération de filtration. Le déplacement du racleur 31 est commandé par un vérin 34.

Du côté opposé au racleur 31 est prévue une zone d'évacuation 35 du gâteau de filtration. Le gâteau peut ainsi tomber par gravité sur un convoyeur à bande tel que 38 ( Fig. 7) ou dans un conteneur non représenté.

Les mailles du piston-filtre 10, au niveau de sa toile de filtration 15, ont avantageusement un diamètre nominal supérieur à celui des mailles de la toile 7 du filtre inférieur 1. On a constaté qu'un tel agencement, tout en assurant une filtration efficace, permet de retarder le colmatage du piston-filtre 10 et d'augmenter la durée d'utilisation de la toile de filtration supérieure 15 avant démontage .

Le diamètre nominal des mailles de la toile 15 du piston-filtre 10 est compris de préférence entre 100 et 300 micromètres tandis que le diamètre nominal des mailles du filtre inférieur est de préférence au plus égal à 50 micromètres, notamment dans le cas d'une filtration de lisier de porcs.

Ceci étant, le fonctionnement du dispositif de filtration est le suivant.

A partir de la position illustrée sur la Figure 1, pour laquelle la face inférieure du piston-filtre 10 est au-dessus de l'orifice d'admission 27, tandis que le filtre 1 est au-dessous de l'ouverture inférieure de la chambre d'aspiration 8, la montée du caisson 2 est commandée jusqu'à ce que le filtre 1 ferme la partie inférieure de cette chambre 8 comme illustré sur la figure 2. La vanne d'admission 28 est en position fermée.

Lorsque la chambre 8 est ainsi réalisée, fermée en haut par le piston-filtre 10 et en bas par le filtre 1, la vanne d'admission 28 est ouverte et la pompe de reprise 29 (Fig.5) est mise en marche pour remplir le volume de la chambre de filtration 8 d'un volume de boue ou de lisier préalablement floculé.

Lorsque le remplissage de la chambre 8 est terminé, après un temps d'admission qui est de l'ordre de 5 secondes, la vanne 28 est refermée.

La descente du piston-filtre 10 est ensuite commandée, le temps de descente pouvant être de l'ordre de 15 secondes. L'effluent ou filtrat bas passe à travers le filtre 1 et est évacué par l'orifice 5.

L'effluent haut qui a traversé la surface filtrante supérieure 15 est aspiré par la pompe à vide 13 à travers les buses b et les canalisations 17 (Fig.3) et est recueilli dans la capacité de stockage C. Le gâteau de filtration G, formé par les matières solides qui étaient en suspension dans la boue, est compris entre le filtre 1 et le piston-filtre 10.

Un essorage ultime est réalisé par augmentation de la pression dans le vérin 11, pendant un temps de compression du gâteau G qui peut être de l'ordre de 5 secondes.

Le filtre 1 et le piston-filtre 10 sont ensuite descendus jusqu'à ce que la toile de filtration 7 se trouve au niveau inférieur du racleur 31. Le piston-filtre 10 est alors légèrement remonté, pour s'écarter du gâteau de filtration G comme illustré sur la figure 4 et laisser le passage au racleur 31.

Le racleur 31 est ensuite déplacé de la gauche vers la droite selon la représentation du dessin pour pousser le gâteau G vers l'évacuation 35 comme illustré sur la figure 4. L'écartement des toiles 7 et 15 est ajusté pour que le racleur 31 agisse simultanément sur elles.

Le nettoyage des toiles de filtration basse 7 et haute 15 est assuré par plusieurs allers et retours transversaux du racleur 31, par exemple quatre allers et retours pendant un temps d'environ 10 secondes.

Un cycle complet de filtration d'un volume est inférieur à la minute.

Les effluents sont évacués à environ 1/3 à travers le piston-filtre 10 et 2/3 à travers le filtre 1.

La pression dans la chambre de filtration 8 reste faible, de l'ordre de 2 bars, ce qui permet des économies de matière sur les éléments de construction du dispositif.

De préférence, la pompe à vide 13 reste en fonctionnement quelle que soit la position du piston-filtre 10, au cours d'une opération de filtration, pour éviter de mouiller le gâteau G avec de l'effluent qui pourrait retomber du piston-filtre.

La capacité C recueillant l'effluent haut est vidée et mise à l'atmosphère après un certain nombre de cycles, par exemple 25 cycles.

La solution de l'invention permet d'obtenir, avec un temps de cycle réduit, un gâteau de filtration G à teneur en liquide réduite.

La figure 7 illustre schématiquement une installation de traitement de boues équipée d'un dispositif D selon l'invention. Les boues, en particulier le lisier, sont recueillies dans une fosse 36 d'où elles sont prélevées pour être envoyées dans une cuve 37 de floculation et, le cas échéant, de désodorisation. Les boues sont extraites de la cuve 37 et dirigées sur le dispositif de filtration D. Les matières solides du gâteau de filtration sont évacuées, par exemple sur un convoyeur à bande 38, et peuvent être transformées par compostage en engrais organo-minéral. Les filtrats sont envoyés dans une installation de traitement 39 où ils peuvent être soumis à un traitement destiné à abaisser leur teneur en azote ammoniacal avant épandage dans le milieu naturel.

Des installations de traitement, où deux ou trois dispositifs de l'art antérieur devaient être montés en série, peuvent fonctionner avec un seul dispositif de filtration D selon l'invention .

Le dispositif de filtration de l'invention peut être utilisé pour le traitement de toutes sortes de boues, par exemple lisier de porcs, lisier de canards, ou pour la filtration de lie de vin, de mélasse, d'huiles de coupe, de boues de peinture, de planctons, de boues de station d'épuration, ou pour la filtration de produits alimentaires, par exemple huiles , notamment huile d'olive, jus de fruits, etc...

Des essais ont été réalisés avec un dispositif pilote sur du lisier de porcs.

### Premier essai

Un premier essai a été effectué avec, sur le piston-filtre 10 , une toile de filtration 15 de diamètre nominal de maille de 300 micromètres et, sur le filtre inférieur 1, une toile de filtration 7 de diamètre nominal de maille de 50 micromètres. Avant filtration on a ajouté de manière classique un floculant au lisier brut et un produit pour atténuer les odeurs.

On a recueilli séparément le filtrat haut, le filtrat bas, et le gâteau de filtration G.

La quantité de lisier brut traité a été de 30 litres; la quantité de floculant de 4 litres. Les résultats ont été les suivants, les proportions étant des rapports massiques , et les abréviations signifiant:
MSt = matières sèches totales
N-NH₄+ = azote ammoniacal
N-NTK = azote total
DCO = demande chimique en oxygène

| | MSt % | N-NH4+ % | N-NTK % | P₂O₅ % | DCO (mg/l) | K₂O % |
|---|---|---|---|---|---|---|
| Lisier brut | 8.31 | 0.37 | 0.58 | 0.66 | 76200 | 0.26 |
| Filtrat haut | 0.84 | 0.28 | 0.27 | 0.04 | 10200 | 0.23 |
| Filtrat bas | 0.84 | 0.27 | 0.25 | 0.03 | 9400 | 0.23 |
| Boues (Gâteau) | 25.56 | 0.47 | 1.00 | 5.54 | | 0.28 |

Les deux filtrats obtenus ont sensiblement la même composition.
En définissant l'abattement comme le rapport:
( différence entre la masse d'un composant, ou la valeur d'une grandeur, dans le lisier et la masse de ce composant, ou la valeur de cette grandeur, dans le filtrat / masse du composant, ou valeur de la grandeur, dans le lisier ),
les résultats d'abattement sont de l'ordre de :
- 90 % de matières sèches,
- 87 % de la DCO,
- 94 % du phosphore,
- 30 % de l'azote,
- 11 % de la potasse.

### Deuxième essai

Cet essai a été réalisé sur un volume de 50 litres de lisier brut et un bilan a pu être établi.Les filtrats haut et bas ont été rassemblés.

Pour la suite, on rappelle que l'abréviation :

1 ppm = 1 partie par million (en masse).

| Données : | |
|---|---|
| Quantité de lisier brut | 50 litres |
| Quantité de floculant | 5 litres |
| Désodorisation | 100 ppm d'ester alkylique d'acide undécylénique (soit 5 g/ 50 litres) 200 ppm de perborate |
| Quantité de filtrat | 37 litres |
| Quantité de boues (gâteau) | 18 Kg |

| Paramètres : | |
|---|---|
| Pression de filtration : | 2 bars |
| Temps d'admission du lisier : | 5 s |
| Temps de filtration : | 25 s |
| Temps d'aspiration du filtrat : | 20 s |
| Temps de cycle : | 75 s |

Les résultats ont été les suivants ( proportions massiques , avec mêmes significations des abréviations que pour le premier essai) :

| | % MSt | % N-NH₄+ | % N-NTK | % P₂O₅ | K₂O | DCO |
|---|---|---|---|---|---|---|
| Lisier brut | 8.03 | 0.37 | 0.67 | 0.44 | 0.26 | 59200 |
| Filtrats | 0.94 | 0.29 | 0.39 | 0.06 | 0.24 | 10800 |
| Boues (Gâteau) | 20.10 | 0.49 | 1.03 | 1.46 | 0.20 | |

Les résultats d'abattement sont de l'ordre de:
- 90% de matières sèches,
- 90% du phosphore,
- 50% de l'azote,
- 30% de la potasse

### Troisième essai

Un troisième essai a été effectué pour étudier l'influence de la taille de la maille de la toile 7 du filtre inférieur 1.

On a effectué une filtration avec une toile 7 de maille très fine, de taille inférieure ou égale à 10 micromètres, c'est à dire nettement inférieure à 50 micromètres. Les résultats obtenus ont été semblables à ceux obtenus avec une toile à maille de 50 micromètres. Il n'est donc pas avantageux de descendre nettement au-dessous de 50 micromètres pour la maille de la toile inférieure puisqu'il n'y a pas d'amélioration sensible de la filtration; et que par contre on risque d'obturer plus facilement la toile 7.

Finalement, les essais ont montré que l'invention permet , avec du lisier de porcs floculé, d'obtenir les résultats d'abattement suivants:
80 à 90% de matières sèches,
80 à 90% de la DCO,
80 à 90% du phosphore,
40 à 60% de l'azote avec un temps de cycle réduit, pouvant être inférieur à 40 secondes.

## Revendications

1. Dispositif de filtration de boues, comprenant :
- un filtre (1) disposé sur un caisson (4) horizontal et pouvant être déplacé verticalement d'une position de filtration à une position de nettoyage et inversement, ce filtre (1) constituant, dans sa position de filtration, le fond d'une chambre de filtration (8) d'axe vertical,
- un piston (10) propre à fermer la chambre de filtration en partie haute,
- des moyens de commande (3,11) d'un déplacement relatif entre le caisson (4) muni du filtre (1) et le piston (10) pour que, lors du rapprochement du piston et du caisson, une pression s'exerce sur un volume de boue introduit dans la chambre de filtration (8), de sorte qu'un filtrat liquide s'écoule vers le bas à travers le filtre (1) et qu'un gâteau (G) de matières solides demeure sur le filtre (1) en fin d'opération,
- et un dispositif racleur (31) prévu pour évacuer ce gâteau, lorsque le filtre (1) est placé dans sa position de nettoyage,
caractérisé par le fait que le piston est réalisé sous forme d'un piston-filtre (10) de sorte qu'un effluent liquide passe à travers le piston-filtre (10) lors de la diminution du volume de la chambre de filtration (8), et qu' un moyen de pompage par aspiration (P) est prévu pour évacuer l'effluent au-dessus du piston-filtre (10).

2. Dispositif de filtration selon la revendication 1, caractérisé par le fait que le moyen de pompage par aspiration (P) comprend une pompe à vide (13).

3. Dispositif de filtration selon la revendication 2, caractérisé par le fait que la pompe à vide (13) est propre à créer une pression absolue d'environ 400 à 500 millibars du côté du piston-filtre (10) opposé à la chambre de filtration (8).

4. Dispositif de filtration selon la revendication 2 ou 3, caractérisé par le fait que la pompe à vide (13) est combinée avec une capacité (C) dans laquelle est recueilli l'effluent aspiré à travers le piston-filtre (10).

5. Dispositif de filtration selon l'une des revendications précédentes, caractérisé par le fait que le piston-filtre (10) comporte, du côté opposé à la chambre de filtration (8), un volume fermé (16) propre à rassembler l'effluent qui a traversé le filtre (15) du piston-filtre, ce volume fermé étant relié au moyen de pompage par aspiration (P), en particulier par des buses (b) et des canalisations (17).

6. Dispositif de filtration selon la revendication 5, caractérisé par le fait que le piston-filtre (10) est constitué d'un cylindre creux, ouvert du côté tourné vers la chambre de filtration (8), et muni d'un fond (18) à son extrémité opposée, l'extrémité ouverte du cylindre creux étant équipée d'une grille de soutien (14) sous laquelle est fixé le filtre (15) proprement dit, en particulier une toile de filtration.

7. Dispositif de filtration selon la revendication 6, caractérisé par le fait que le volume (16) est fermé en partie haute par une plaque horizontale (22) démontable traversée par des passages (23) permettant l'aspiration du filtrat, le raccordement à la canalisation d'aspiration étant effectué au niveau d'un orifice (19) traversant le fond (18) qui ferme le cylindre creux en partie haute.

8. Dispositif de filtration selon l'une des revendications précédentes , caractérisé par le fait que les mailles du filtre (15) prévu sur le piston-filtre (10) ont un diamètre nominal supérieur à celui des mailles du filtre inférieur (1), en particulier de 100 à 300 micromètres pour le filtre supérieur (15) et au plus égal à 50 micromètres pour le filtre inférieur (1).

9. Dispositif de filtration selon la revendication 1, caractérisé par le fait que le filtre (1) et le piston-filtre (10) comportent une toile de filtration (7,15); que le racleur (31) est équipé de moyens de brossage en partie basse (32) et en partie haute (33); que dans la position de nettoyage des filtres (1,15), le filtre (1) et le piston-filtre (10) ont été descendus jusqu'à ce que la toile de filtration (7) du filtre (1) se trouve au niveau inférieur du racleur (31), l'écartement des toiles (7,15) étant ajusté pour que le racleur (31) agisse simultanément contre le filtre inférieur (1) et le filtre supérieur (15).

10. Installation de traitement de boues, notamment de lisier, comprenant au moins un dispositif de filtration selon l'une des revendications précédentes.

11. Procédé de filtration de boues, utilisant un dispositif de filtration selon l'une des revendications précédentes, caractérisé par le fait que le moyen de pompage par aspiration (P), en particulier une pompe à vide (13), combiné avec le piston-filtre (10), est maintenu en fonctionnement quelle que soit la position du piston, pendant les opérations de filtration.

## Patentansprüche

1. Vorrichtung zur Filterung von Schlamm, die aufweist:
- ein Filter (1), das auf einem waagrechten Kasten (4) angeordnet ist und senkrecht von einer Filterstellung in eine Reinigungsstellung und umgekehrt verschoben werden kann, wobei dieses Filter (1) in seiner Filterstellung den Boden einer Filterkammer (8) mit senkrechter Achse bildet,
- einen Kolben (10), der die Filterkammer im oberen Bereich schließen kann,
- Steuereinrichtungen (3, 11) für eine relative Verschiebung zwischen dem mit dem Filter (1) versehenen Kasten (4) und dem Kolben (10), damit bei Annäherung des Kolbens und des Kastens ein Druck auf ein Schlammvolumen ausgeübt wird, das in die Filterkammer (8) eingeführt wurde, so daß ein flüssiges Filtrat durch das Filter (1) nach unten fließt und am Ende des Vorgangs ein Kuchen (G) aus Feststoffen auf dem Filter (1) verbleibt,
- und eine Schabervorrichtung (31), die vorgesehen ist, um diesen Kuchen abzuführen, wenn das Filter (1) in seine Reinigungsstellung gebracht wird,
dadurch gekennzeichnet, daß der Kolben in Form eines Kolben-Filters (10) ausgeführt ist, so daß bei der Volumenverringerung der Filterkammer (8) ein flüssiges Abwasser den Kolben-Filter (10) durchquert, und daß eine Saugpumpeinrichtung (P) vorgesehen ist, um das Abwasser oberhalb des Kolben-Filters (10) abzuführen.

2. Filtervorrichtung nach Anspruch 1, dadurch gekennzeichnet, daß die Saugpumpeinrichtung (P) eine Vakuumpumpe (13) enthält.

3. Filtervorrichtung nach Anspruch 2, dadurch gekennzeichnet, daß die Vakuumpumpe (13) einen Absolutdruck von etwa 400 bis 500 Millibar auf der Seite des Kolben-Filters (10) erzeugen kann, die der Filterkammer (8) entgegengesetzt liegt.

4. Filtervorrichtung nach Anspruch 2 oder 3, dadurch gekennzeichnet, daß die Vakuumpumpe (13) mit einem Raum (C) kombiniert ist, in dem das Abwasser aufgefangen wird, das durch den Kolben-Filter (10) hindurch angesaugt wird.

5. Filtervorrichtung nach einem der vorhergehenden Ansprüche, dadurch gekennzeichnet, daß der Kolben-Filter (10) auf der der Filterkammer (8) entgegengesetzt liegenden Seite ein geschlossenes Volumen (16) aufweist, das das Abwasser sammeln kann, welches das Filter (15) des Kolben-Filters durchquert hat, wobei dieses geschlossene Volumen mit der Ansaugpumpeinrichtung (P) insbesondere über Düsen (b) und Leitungen (17) verbunden ist.

6. Filtervorrichtung nach Anspruch 5, dadurch gekennzeichnet, daß der Kolben-Filter (10) aus einem Hohlzylinder besteht, der auf der zur Filterkammer (8) weisenden Seite offen und an seinem entgegengesetzten Ende mit einem Boden (18) versehen ist, wobei das offene Ende des Hohlzylinders mit einem Haltegitter (14) ausgestattet ist, unter dem das eigentliche Filter (15) befestigt ist, insbesondere ein Filtersieb.

7. Filtervorrichtung nach Anspruch 6, dadurch gekennzeichnet, daß das Volumen (16) im oberen Bereich von einer abnehmbaren, waagrechten Platte (22) verschlossen wird, die Durchlässe (23) aufweist, welche das Ansaugen des Filtrats erlauben, wobei der Anschluß an die Ansaugleitung in Höhe einer Öffnung (19) erfolgt, die den den Hohlzylinder im oberen Bereich verschließenden Boden (18) durchquert.

8. Filtervorrichtung nach einem der vorhergehenden Ansprüche, dadurch gekennzeichnet, daß die Maschen des auf dem Kolben-Filter (10) vorgesehenen Filters (15) einen Nenndurchmesser haben, der größer ist als der der Maschen des unteren Filters (1), insbesondere von 100 bis 300 Mikrometern für das obere Filter (15) und höchstens 50 Mikrometern für das untere Filter (1).

9. Filtervorrichtung nach Anspruch 1, dadurch gekennzeichnet, daß das Filter (1) und der Kolben-Filter (10) ein Filtersieb (7, 15) aufweisen; daß der Schaber (31) im unteren (32) und oberen Bereich (33) mit Bürsteinrichtungen ausgestattet ist; daß in der Reinigungsstellung der Filter (1, 15) das Filter (1) und der Kolben-Filter (10) abgesenkt wurden, bis das Filtersieb (7) des Filters (1) sich auf der unteren Höhe des Schabers (31) befindet, wobei der Abstand der Siebe (7, 15) so eingestellt wird, daß der Schaber (31) gleichzeitig auf das untere Filter (1) und das obere Filter (15) einwirkt.

10. Anlage zur Verarbeitung von Schlamm, insbesondere Gülle, die mindestens eine Filtervorrichtung nach einem der vorhergehenden Ansprüche aufweist.

11. Verfahren zur Filterung von Schlamm, das eine Filtervorrichtung nach einem der vorhergehenden Ansprüche verwendet, dadurch gekennzeichnet, daß die Saugpumpeinrichtung (P), insbesondere eine Vakuumpumpe (13), in Kombination mit dem Kolben-Filter (10), während der Filtervorgänge unabhängig von der Stellung des Kolbens in Betrieb gehalten wird.

## Claims

1. Sludge filtration device, comprising:
- a filter (1) placed over a horizontal box (4) which can be moved vertically from a filtering position to a cleaning position and vice versa, this filter (1) constituting, in its filtering position, the bottom of a filter chamber (8) of vertical axis,
- a piston (10) suitable for closing the filter chamber at the top part,
- means (3, 11) for causing relative movement between the box (4) provided with the filter (1) and the piston (10) in order, as the piston and box are being moved closer together, for pressure to be exerted on a volume of sludge introduced into the filter chamber (8), so that a liquid filtrate flows downwards through the filter (1) and so that a cake (G) of solid matter remains on the filter (1) at the end of the operation,
- and a scraper device (31) provided for removing this cake when the filter (1) is placed in its cleaning position,
characterized in that the piston is made in the form of a filter piston (10) so that a liquid effluent passes through the filter piston (10) as the volume of the filter chamber (8) is being decreased and in that a suction pumping means (P) is provided for removing the effluent above the filter piston (10).

2. Filtration device according to Claim 1, characterized in that the suction pumping means (P) comprises a vacuum pump (13).

3. Filtration device according to Claim 2, characterized in that the vacuum pump (13) is able to create an absolute pressure of approximately 400 to 500 millibars on the opposite side of the filter piston (10) from the filter chamber (8).

4. Filtration device according to Claim 2 or 3, characterized in that the vacuum pump (13) is combined with a tank (C) in which the effluent sucked up through the filter piston (10) is collected.

5. Filtration device according to one of the preceding claims, characterized in that the filter piston (10) includes, on the opposite side from the filter chamber (8), a closed volume (16) suitable for gathering the effluent which has passed through the filter (15) of the filter piston, this closed volume being connected to the suction pumping means (P), in particular by nozzles (b) and hoses (17).

6. Filtration device according to Claim 5, characterized in that the filter piston (10) consists of a hollow cylinder, open on the side turned towards the filter chamber (8) and provided at its opposite end with a base (18), the open end of the hollow cylinder being equipped with a support screen (14) under which the filter proper (15), in particular a filter cloth, is fixed.

7. Filtration device according to Claim 6, characterized in that the volume (16) is closed in the top part by a removable horizontal plate (22) through which passages (23), enabling the filtrate to be sucked out, pass, the connection to the suction line being made at an orifice (19) passing through the base (18) which closes off the hollow cylinder in the top part.

8. Filtration device according to one of the preceding claims, characterized in that the meshes of the filter (15) provided on the filter piston (10) have a nominal diameter greater than that of the meshes of the lower filter (1), in particular from 100 to 300 micrometres in respect of the upper filter (15) and at most equal to 50 micrometres in respect of the lower filter (1).

9. Filtration device according to Claim 1, characterized in that the filter (1) and the filter piston (10). have a filter cloth (7, 15), in that the scraper (31) is equipped with brushing means in the bottom part (32) and in the top part (33) and in that, in the position for cleaning the filters (1, 15), the filter (1) and the filter piston (10) have descended until the filter cloth (7) of the filter (1) lies at the lower level of the scraper (31), the spacing between the cloths (7, 15) being adjusted so that the scraper (31) acts simultaneously against the lower filter (1) and the upper filter (15).

10. Sludge treatment plant, in particular for liquid manure, comprising at least one filtration device according to one of the preceding claims.

11. Sludge filtration process using a filtration device according to one of the preceding claims, characterized in that the suction pumping means (P), in particular a vacuum pump (13), combined with the filter piston (10), continues to operate, whatever the position of the piston, during the filtration operations.
